(19) Europäisches Patentamt
European Patent Office
Office européen des brevets

(11) Veröffentlichungsnummer: **0 088 300**
**B1**

# (12) EUROPÄISCHE PATENTSCHRIFT

(45) Veröffentlichungstag der Patentschrift: **05.12.84**

(51) Int. Cl.³: **C 09 J 3/14**, C 08 F 220/20, C 09 J 7/02

(21) Anmeldenummer: **83101839.5**

(22) Anmeldetag: **25.02.83**

## (54) Verfahren zur Herstellung selbsthaftender Überzüge.

(30) Priorität: **06.03.82 DE 3208217**

(43) Veröffentlichungstag der Anmeldung: **14.09.83 Patentblatt 83/37**

(45) Bekanntmachung des Hinweises auf die Patenterteilung: **05.12.84 Patentblatt 84/49**

(84) Benannte Vertragsstaaten: **AT BE CH DE FR GB IT LI NL SE**

(56) Entgegenhaltungen:
**BE-A-675 420**
**DE-A-2 031 706**
**DE-A-2 357 486**
**FR-A-2 101 550**
**US-A-4 181 752**
**US-A-4 311 759**

(73) Patentinhaber: **BASF Aktiengesellschaft, Carl-Bosch-Strasse 38, D-6700 Ludwigshafen (DE)**

(72) Erfinder: **Druschke, Wolfgang, Dr., Berliner Strasse 28, D-6716 Dirmstein (DE)**
Erfinder: **Heil, Guenter, Dr., Dirmsteiner Weg 41, D-6700 Ludwigshafen 29 (DE)**
Erfinder: **Buensch, Heilmut, Dr., Panoramastrasse 81, D-6906 Leimen (DE)**
Erfinder: **Jaeger, Helmut, Im Weinberg 4, D-6719 Bobenheim (DE)**

**EP 0 088 300 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung selbsthaftender Überzüge auf Oberflächen von Substraten durch Auftragen einer giessfähigen Masse, die olefinisch ungesättigte polymerisierbare Verbindungen enthält, und Bestrahlung der Aufträge mit energiereichen Strahlen.

Haftklebemassen werden in steigender Menge zur Herstellung von Etiketten, Klebebändern, Dekorfolien und ähnlichen selbstklebenden flächigen Gebilden eingesetzt.

Die hierfür verwendeten Haftklebemassen müssen bestimmte Eigenschaften haben: Neben einer guten Oberflächenklebrigkeit soll eine möglichst hohe Kohäsion der Beschichtung gegeben sein. Der Haftkleber soll eine gute Beständigkeit gegen Licht, Luft und Feuchtigkeit besitzen und die Klebrigkeit soll über einen möglichst weiten Temperaturbereich konstant sein, d.h. bei niederen Temperaturen soll noch eine gute Oberflächenklebrigkeit vorhanden sein und bei hohen Temperaturen darf die Kohäsion nicht wesentlich abfallen.

Sehr verbreitet auf dem Haftklebegebiet sind Kautschuklösungen als Haftklebemassen. Das für sich klebrige Elastomere wird durch Zusatz von klebrigmachenden Harzen zum Haftkleber. Massen auf Kautschukbasis besitzen eine gute Oberflächenklebrigkeit *(tack)* und hohe Kohäsion (Nerv). Ihre Alterungsbeständigkeit lässt jedoch zu wünschen übrig: Damit hergestellte durchsichtige Klebefolien vergilben rasch und ihre Klebekraft verringert sich. Ein weiterer Nachteil der Kautschukkleber ist, dass sie als Lösungen in organischen Lösungsmitteln auf die Trägermaterialien aufgebracht und getrocknet werden müssen. Dabei fallen in der Praxis grosse Mengen an Lösungsmitteldämpfen an, deren kostspielige Rückgewinnung jedoch aus gesundheitlichen Gründen, aus Gründen der Reinhaltung der Umwelt und aus wirtschaftlichen Gründen notwendig ist.

Bessere Alterungsbeständigkeit zeigen Haftkleber, die aus Acrylatpolymerisaten bestehen. Auch diese Haftkleber werden jedoch meist in Form von organischen Lösungen oder Dispersionen auf die Trägermaterialien aufgetragen und besitzen somit ebenfalls die Nachteile der Lösungsmittelrückgewinnung bzw. Trocknung. Eine wichtige Voraussetzung für die Brauchbarkeit von Acrylatpolymerisaten für Haftkleber sind verhältnismässig hohe Molekulargewichte, weil nur so gute Kohäsionswerte erzielt werden. Bei Haftkleberlösungen bedeutet aber ein hohes Molekulargewicht des Polymerisates eine hohe Viskosität der Lösung, so dass praktisch nur Lösungen mit geringer Konzentration hergestellt und verarbeitet werden können. Die Folge davon ist, dass grosse Lösungsmittelmengen transportiert, verarbeitet und möglichst gefahrlos gehandhabt werden müssen. Um diese Schwierigkeiten zu überwinden, wurden auch niedermolekulare, niedrigviskose Lösungen von Acrylatpolymerisaten entwickelt, die nach ihrer Applikation auf das Trägermaterial vernetzt werden. Dabei kann man zwei Systeme, nämlich die Zweikomponentensysteme und die selbstvernetzenden Einkomponentensysteme, unterscheiden. Bei Zweikomponentensystemen werden kurz vor der Applikation die beiden miteinander reagierenden Komponenten, z.B. die Lösung eines hydroxylgruppenhaltigen Polymerisates mit der eines mehrwertigen Isocyanates, vermischt und das Gemisch dann auf die Träger aufgebracht. Ein Nachteil dieses Verfahrens ist, dass die beiden Komponenten in gemischtem Zustand nur begrenzt haltbar sind und rasch gelieren. Ein längerer Stillstand der Beschichtungsmaschine kann somit zu aufwendigen Reinigungs- und Instandsetzungsarbeiten Anlass geben.

Die selbstvernetzenden Einkomponentensysteme, welche die beiden reagierenden Komponenten bereits enthalten, besitzen generell den Nachteil einer kritischen Lagerstabilität. Um eine genügende Lagerstabilität zu gewährleisten, muss die Reaktivität klein gehalten werden, damit die Haftkleberlösungen nicht schon vor der Applikation gelieren. Dies führt zwangsläufig zu einer verhältnismässig kleinen Geschwindigkeit der Vernetzungsreaktion auf dem Trägermaterial, so dass solche Systeme für schnellaufende Beschichtungsmaschinen zu langsam reagieren, wodurch die für höchste Kohäsionswerte notwendigen Molekulargewichte nicht erreicht werden.

Eine weitere Möglichkeit ist das Auftragen der Haftklebemassen auf die Trägerfolie in Form von Schmelzen bei Temperaturen über 100°C. Nachteilig für die Praxis ist hier jedoch, dass meist sehr hochviskose Schmelzen bei hohen Temperaturen verarbeitet werden müssen. Ein weiterer Nachteil dieser Haftklebemassen ist, dass wegen der hohen Verarbeitungstemperaturen temperaturempfindliche Trägermaterialien nur durch Anwendung besonderer Massnahmen oder überhaupt nicht beschichtet werden können. Ausserdem weisen Haftklebeschichten, die aus der Schmelze aufgetragen sind, eine ungenügende Wärmestandfestigkeit und Weichmacherbeständigkeit auf.

Es sind zwar bereits aus der niederländischen Patentanmeldung Nr. 6606711 Selbstklebebänder bekannt, die durch Überziehen eines Substrates mit einem Polyacrylatkleber erhalten werden, wobei mindestens ein monomeres Acrylat, z.B. Ethylhexylacrylat, oder dessen Gemisch mit einem copolymerisierbaren Monomeren oder Präpolymer/Monomer-Gemische daraus durch UV-Bestrahlung und anschliessendes Erhitzen polymerisiert werden. Nachteilig an diesem Verfahren sind jedoch der apparative, durch zusätzliche Heizaggregate bedingte Aufwand, die auf höhertemperaturbeständige Substrate beschränkte Anwendbarkeit sowie die Notwendigkeit von Polymerisationsbeschleunigern und/oder Polymerisationskatalysatoren. Durch den Gehalt an Polymerisationsinitiatoren ist es auch nur schwer möglich, konstante Klebewerte zu erhalten.

Ferner ist in der niederländischen Patentanmeldung Nr. 7009629 ein Verfahren zur Herstellung von Klebstoffen beschrieben, bei dem Gemische aus (Meth)acrylsäureestern, wie 2-Ethylhexylacrylat, mit organischen Polymeren, wie Cellulosederivaten, Polyolefinen und Polyestern als Viskositätsregulierungsmittel, gegebenenfalls zusammen mit einem *tackifier*, wie Polyvinylmethylether, in dünner Schicht auf ein Substrat aufgebracht und mit energiereicher Strahlung behandelt werden; nachteilig an diesem Verfahren ist jedoch, dass die Kohäsion der damit erhaltenen Klebschichten für viele Anwendungen auf dem Haftklebergebiet nicht ausreicht.

In der US-PS Nr. 3772063 sind Klebestreifen beschrieben, bei denen die Klebeschicht durch Bestrahlen einer Masse, die mindestens einen (Meth)acrylsäureester mit 1 bis 9 Kohlenstoffatomen im Alkylrest enthält, mit ionisierender Strahlung erhalten werden. Dabei werden jedoch nur Klebeschichten relativ niedriger Kohäsion erhalten.

Durch Bestrahlung mit energiereichen Strahlen erhaltene Klebebänder bzw. Klebefolien mit einer hohen Scherfestigkeit des Klebers sind zwar aus der DE-AS Nr. 2455133 bekannt, doch müssen dabei die Klebemasen aus einem $C_{1-12}$-Alkyl-(meth)acrylatpolymer und einem monomeren polyfunktionellen (Meth)acrylsäureester aus der Schmelze aufgetragen werden.

Aus der DE-OS Nr. 2357486 ist schliesslich ein Verfahren zur Herstellung selbsthaftender Überzüge bekannt, das dadurch gekennzeichnet ist, dass ein bei Raumtemperatur flüssiges Gemisch aus A) mindestens einer polymerisierbaren einfach olefinisch ungesättigten Verbindung, die Polymerisate bildet, die bei Raumtemperatur klebrig sind, B) mindestens einer mindestens zweifach ungesättigten Verbindung, und C) einem polymeren Stoff mit einem Erweichungspunkt unter 50°C, der ein durchschnittliches Molekulargewicht zwischen 500 und 10000 aufweist, mit ionisierender Strahlung behandelt wird. Als Monomere A können dabei Acryl- und Methacrylsäureester von meist 4 bis 12 C-Atome enthaltenden Alkanolen eingesetzt werden. Die nach diesem Verfahren hergestellten Klebeschichten weisen eine hohe Scherfestigkeit bei Raumtemperatur und gute Oberflächenklebrigkeit auf. Nachteilig ist jedoch, dass solche Klebeschichten einen relativ starken kalten Fluss und bei höheren Temperaturen ungenügende Scherfestigkeit zeigen.

Ziel der vorliegenden Erfindung ist es, einen Weg aufzuzeigen, wie man frei von den oben aufgeführten Nachteilen bekannter Verfahren Haftklebeschichten erhält, die sich bei Raumtemperatur leicht auftragen lassen und die nach Vernetzen mit energiereicher Strahlung hohe Scherfestigkeit auch bei höheren Temperaturen und gute Oberflächenklebrigkeit und gute Weichmacherbeständigkeit zeigen.

Es wurde nun gefunden, dass man selbsthaftende Überzüge durch Beschichten von Trägermaterialien mit Acrylsäureestern und Bestrahlen der Überzüge mit energiereichen Strahlen mit Vorteil herstellen kann, indem man als Acrylsäureester Derivate von Dihydroxypropylacrylsäureestern einsetzt und diese im Gemisch mit

a) 0 bis 120 Gew.-% Polymeren einer Glastemperatur unter 0°C und eines K-Wertes von 20 bis 80, und/oder

b) 0 bis 90 Gew.-% eines üblichen klebrigmachenden Harzes

auf die Trägermaterialien aufträgt, wobei die Menge an a und b zusammen mindestens 5 Gew.-% beträgt und die Gewichtsprozente von a und b auf das Gewicht der Dihydroxypropylacrylatderivate bezogen ist. Der Ausdruck Dihydroxypropylacrylsäureester bezeichnet dabei sowohl die 2,3-Dihydroxypropyl-(1)- als auch die 1,3-Dihydroxypropyl-(2)-Verbindungen. Als Derivate der Dihydroxyproylacrylsäureester kommen vor allem deren Alkylether und Ester mit gesättigten Carbonsäuren in Betracht, wobei Monoalkylether und Monoalkylcarbonsäureester der Dihydroxypropylacrylsäureester von besonderer Bedeutung sind. Insbesondere wegen ihrer leichten Zugänglichkeit bevorzugte Derivate der Dihydroxypropylacrylate haben die allgemeinen Formeln:

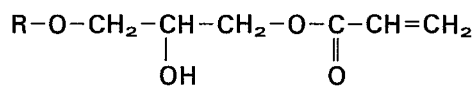

und

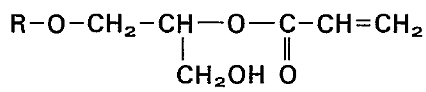

in denen R für 4 bis 16, insbesondere 6 bis 12 C-Atome aufweisende Alkyl- oder Acylgruppen steht. Beispiele hierfür sind die Mono-n-butyl-, Mono-2-ethylhexyl-, Monoisononyl-, Monoisooctyl-, Monodecyl- und Monolaurylether des 2,3-Dihydroxypropylacrylats und des 1,3-Dihydroxyisopropylacrylats sowie deren Monoisovaleriansäureester, Mono-2-ethylhexansäureester, Monoversaticsäureester, Monolaurinsäureester und Monopalmitinsäureester.

Derartige Derivate der Dihydroxypropylacrylate können auch als Gemische eingesetzt werden. Sie sind leicht nach üblichen und bekannten Verfahren zugänglich. Entsprechende Monoester können z.B. durch Umsetzung von Glycidylacrylat mit 4 bis 16 C-Atome enthaltenden gesättigten aliphatischen Monocarbonsäuren oder durch Umsetzung von Glycidylestern oder Glycidylethern der Formel:

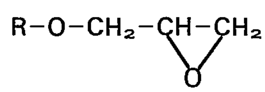

in der R die oben bezeichnete Bedeutung hat, mit Acrylsäure, insbesondere unter Verwendung von Katalysatoren, wie tert.-Aminen oder Thioethern, bei 100 bis 130°C unter Vorlage einer Komponente, im allgemeinen der Glycidylverbindung, in einen Rührkessel und Zulauf des jeweils anderen Reaktionspartners hergestellt werden. Gegen vorzeitige Polymerisation der Acryldoppelbindungen können übliche Polymerisationsinhibitoren verwendet werden. Obwohl solche Herstellverfahren nicht neu, sondern allgemeiner Stand der Technik sind, kann die Wahl der geeigneten Katalysatoren bzw. Katalysatorengemische, Reaktionstemperaturen sowie Polymerisationsinhibitoren die Eigenschaften der damit hergestellten Haftklebermischungen, z.B. ihre Viskosität vor der Bestrahlung, die zur Erzielung eines bestimmten niedrigen Restmonomerengehalts benötigte Strahlendosis oder die Klebeeigenschaften des bestrahlten und polymerisierten Haftkleberfilms beeinflussen. Um zu den in den Beispielen genannten Eigenschaften der Reaktionsprodukte bzw. ihrer Formulierungen zu gelangen, haben sich folgende Reaktionsbedingungen bewährt:

1. Umsetzungstemperaturen bei der Herstellung von:
   Monoalkylethern aus Glycidylacrylat 105±5°C
   Monoalkylestern aus Glycidylacrylat 125±5°C
2. Katalysatoren:
   Bei Monoalkylethern 1 bis 2 Gew.-% Thiodiglykol
   Bei Monoalkylestern 0,5 bis 1 Gew.-% Thiodiglykol
   oder 0,5 Gew.% Thiodiglykol + 0,2 Gew.-% Benzyldimethylamin
3. Polymerisationsinhibitoren:
   allgemein 300 bis 1000 ppm Tris-(N-cyclohexyldiazeniumdioxy)aluminium
   + 500 bis 1000 ppm 2,6-Di-tert.-butyl-p-kresol
   oder/und 500 bis 1000 ppm Phenothiazin

Die Herstellung erfolgt im allgemeinen lösungsmittelfrei und ohne weitere Aufarbeitungsschritte, d.h. die Monoalkylether bzw. Monoalkylester des Dihydroxypropylacrylats können ohne weitere Reinigung für die Massen eingesetzt werden.

Als Polymere a eignen sich solche einer Glastemperatur unter 0°C und eines K-Wertes bestimmt nach DIN 53 726 von 20 bis 80, die im allgemeinen ohne Lösungsmittel mit den Derivaten des Dihydroxypropylacrylats zu einer homogenen, bei Raumtemperatur giessbaren Lösung mischbar sind. Derartige Polymere können in an sich üblicher Weise unter Verwendung radikaler Initiatoren in Emulsion, Suspension, in der Schmelze oder vorzugsweise in Lösung durch Polymerisation hergestellt sein. Geeignet sind beispielsweise Polymerisate oder Mischpolymerisate aus monoolefinisch ungesättigten Carbonsäureestern, wie geradkettigen oder verzweigten, 1 bis 12 C-Atome in den Alkylgruppen enthaltenden Estern der Acryl- und Methacrylsäure, wie Methyl-, Ethyl-, Propyl-, Butyl-, Pentyl-, Hexyl-, 2-Ethylhexyl-, Octyl-, Decyl- und Dodecylacrylat und -methacrylat, sowie von Vinylestern, wie Vinylacetat, Vinylpropionat, Vinylethylhexanoat, Vinylversatat und Vinyllaurat. Neben den Carbonsäureestern können auch andere olefinisch ungesättigte Monomere, wie meist 3 bis 5 C-Atome aufweisende Mono- oder Dicarbonsäuren, z.B. Acrylsäure, Methacrylsäure, Malein-, Fumar-, Itaconsäure oder Crotonsäure, sowie saure oder neutrale Alkylester der ungesättigten Dicarbonsäuren einpolymerisiert sein. Als weiterhin geeignete Comonomere seien Monomere mit Hydroxylgruppen, wie Hydroxyethyl-, -propyl-, -butylacrylat und -methacrylat sowie die von Oligo- bzw. Polymeren des Ethylen- oder Propylenoxids abgeleiteten -hydroxypolyalkoxyacrylate und -methacrylate, Hydroxyalkylvinylether, wie Hydroxyethyl- und Butandiolmonovinylether, Dihydroxyverbindungen, wie 2,3-Dihydroxypropylacrylat und -methacrylat, Chlorhydroxypropylacrylat sowie vinylaromatische Monomere, wie Styrol, Vinyltoluol, ferner Amide α,β-olefinisch ungesättigter Mono- und/oder Dicarbonsäuren, wie (Meth)acrylamid, oder Nitrile, wie Acrylnitril und Methacrylnitril, Vinylhalogenide wie Vinylchlorid und Vinylidenchlorid, 1,3-Diene, wie Butadien und Isopren und Alkylester α,β-monoolefinisch ungesättigter Dicarbonsäuren, wie Malonsäurediethyl- und -dibutylester genannt. Die Polymeren a können in den erfindungsgemäss einzusetzenden Haftklebergemischen in Mengen bis zu 120, vorzugsweise in Mengen von 20 bis 100 Gew.-%, bezogen auf das Gewicht an Derivaten des Dihydroxypropylacrylats, enthalten sein.

Besonders bevorzugte Polymere a sind Copolymerisate aus Acrylsäureestern, Vinylestern bzw. -ethern, Vinylaromaten und gegebenenfalls α,β-ungesättigten Mono- und Dicarbonsäuren.

Die erfindungsgemäss einzusetzenden Gemische können auch statt der Polymeren a oder zusätzlich zu ihnen übliche klebrigmachende Harze b *(tackifier)* in Mengen bis zu 90, vorzugsweise von 5 bis 50 Gew.-%, bezogen auf das Gewicht der Derivate des Dihydroxypropylacrylats, enthalten. Geeignete Harze b sind beispielsweise Terpenharze, Balsamharze, Kolophoniumharze, Kolophonium, hydriertes Kolophonium, Ester des Kolophoniums oder hydrierten Kolophoniums, wie der Glycerinester, der Pentaerythritester, der Ethylenglykolester, Diethylenglykolester, Methylester oder der Propylester des (hydrierten) Kolophoniums. Ester des bei der vollständigen Hydrierung des Kolophoniums entstehenden Hydroabiethylalkohols sind ebenfalls geeignet, z.B. der Benzoesäure- oder Phthalsäureester. Gut klebrig machende Harze b sind ferner die üblichen Terpenphenolharze, Alkylphenolharze, Ketonharze, wie Kondensationsprodukte des Cyclohexanons, Aldehydharze, Styrolcopolymerisate, die beispielsweise durch Polymerisation von Styrol mit Acrylestern, Vinyltoluol oder Isobutylen erhalten werden. Cumaronharze, Indenharze, Kohlenwasserstoffharze, ferner niedermolekulare Polyvinylisobutylether oder Polyolefine, wie niedermolekulare Polyisobutene. Zusammen soll die Menge an Polymeren a und/oder klebrigmachenden Harzen b in den Haftklebergemischen mindestens 5 Gew.-%, bezogen auf das Gewicht der Dihydroxypropylacrylatderivate betragen.

Als mindestens zweifach olefinisch ungesättigte Monomere c kommen beispielsweise in Frage: Acrylester und Methacrylester mehrwertiger aliphatischer Alkohole (mit vorzugsweise 2 bis 12 C-Atomen), wie Butandioldiacrylat-1,4, Triethylenglykoldiacrylat, Tetraethylenglykoldiacrylat, Hexandioldiacrylat, Trimethylolpropantriacrylat, Tripropylenglykoldiacrylat, Trimethylolpropantriacrylat, Tripropylenglykoldiacrylat, Pentaerythrittriacrylat, Pentaerythrittetracrylat und die entsprechenden Methacrylsäureester, N-Alkylenbis-(meth)acrylamide und deren Derivate, wie N-Methylenbisacrylamid, Bis-(N-methylolacrylamid)glykolether, Xylylenbisacrylamid und Bis-(N-methylolacrylamid)diethylenglykolether. Ihre Menge beträgt für besondere Einsatzgebiete vorzugsweise 2 bis 10 Gew.-%, bezogen auf die Dihydroxypropylacrylatderivate.

Bei dem erfindungsgemässen Verfahren ist es auch möglich, dass das Gemisch weitere monoolefinisch ungesättigte Monomere d enthält, wie beispielsweise Acrylsäureester, vorzugsweise Butyl-, 2-Ethylhexyl-, Nonyl-, Dodecyl-, Octyl-, Isooctyl-, Ethyldiglykolacrylat sowie Vinylester, vorzugsweise Vinyl-2-ethylhexanoat, N-Vinylcaprolactam und N-Vinylpyrrolidon. Die Menge an derartigen zusätzlichen monoolefinisch ungesättigten Monomeren d liegt im allgemeinen zwischen 0 und 15 Gew.-%, bezogen auf das Gewicht des Dihydroxypropylacrylats.

Den erfindungsgemäss zu verwendenden Gemischen können schliesslich gegebenenfalls in untergeordneten Mengen weitere Zusätze e, wie sie bei Haftklebern üblich sind, zugegeben werden, beispielsweise Weichmacher, wie Dibutyl-, Dibenzyl- und Dioctylphthalat, Stabilisatoren, Haftungsmittel oder auch z.B. zum Einstellen der Viskosität geringe Mengen Lösungsmittel.

Die Polymeren a und/oder klebrigmachenden Harze b werden gegebenenfalls getrocknet und mit den Derivaten des Dihydroxypropylacrylats bei Temperaturen bis zu 150°C gemischt. Die Mischung kann dann gegebenenfalls mit weiteren Monomeren c und/oder d versetzt werden. Es ist auch möglich, von Polymerlösungen oder wässerigen bzw. nichtwässerigen Dispersionen auszugehen und von den Gemischen das Lösungsmittel und/oder die äussere Phase zu entfernen.

Die Haftklebergemische besitzen bei Ausschluss von energiereicher Strahlung eine nahezu unbegrenzte Topfzeit, d.h. ihre Viskosität ist über lange Zeit stabil und eine Gelierung tritt selbst bei höheren Temperaturen nicht ein.

Die Haftklebergemische werden erfindungsgemäss zur Herstellung selbstklebender Überzüge durch Beschichten flächiger Gebilde verwendet und eignen sich insbesondere zur Herstellung von Klebebändern, Klebefolien und Selbstklebeetiketten, selbstklebenden Wand- und Bodenbelägen sowie selbstklebenden Antidröhnmaterialien. Als Trägermaterialien kommen beispielsweise Folien aus Polyethylen, Polypropylen, Polyethylenterephthalat, Polyvinylchlorid oder Metallen, faserige Materialien wie Papier, Pappe oder textile Stoffe, bituminöse Materialien, Glas oder Holz in Frage.

Die Beschichtung der Trägermaterialien mit den Haftklebergemischen kann im direkten Auftrag, z.B. durch Rakeln, Rollen, Giessen, Walzen oder mittels Düsen, erfolgen. Beim indirekten Auftrag, d.h. nach dem Transferverfahren, können die Haftklebergemische in an sich üblicher Weise zunächst auf einen nichthaftenden Träger, z.B. siliconisiertes Papier, aufgebracht, vernetzt und dann auf das gewünschte Trägermaterial, z.B. Weich-PVC-Folie, übertragen werden.

Man wählt im allgemeinen Haftkleberschichtdicken oberhalb 5, vorteilhaft oberhalb 20 und unter 200 µm, entsprechend Beschichtungen von mehr als 5 bzw. mehr als 20 und weniger als 200 g/m².

Zur Herstellung eines selbsthaftenden Überzugs werden die Gemische mit Hilfe üblicher Beschichtungsvorrichtungen auf die Trägermaterialien aufgebracht und vorzugsweise unter Ausschluss von Sauerstoff, meist kurzfristig, energiereichen Strahlen, insbesondere einem Elektronenstrahl hoher Energie, unterworfen.

Geeignete Strahlungsquellen sind z.B. Elektronenstrahlgeneratoren und zwar sowohl Scanneranlagen als auch Elektro-Curtain-Anlagen.

Scanneranlagen senden einen Elektronenstrahl in Richtung Austrittfenster auf die Klebemassen. Der Strahl wird im allgemeinen über die jeweilige Arbeitsbreite in Frequenzen von 100 bis 200 Hz gefächert.

Elektro-Curtain-Anlagen besitzen keinen Scanner und damit keinen oszillierenden Einzelstrahl. Die Elektronen treten in Form eines Strahlenbündels kontinuierlich über die gesamte Breite aus.

Bei der Behandlung mit energiereichen Strahlen wird das sirupöse Haftklebegemisch in einen hochwertigen Klebefilm mit ausgezeichneten Klebeeigenschaften überführt. Die Energiedosis beträgt meist 1 bis 500 kGy (0,1 bis 50 Mrad), vorzugsweise 10 bis 250 kGy (1 bis 25 Mrad). Besonders bewährt hat sich der Bereich von 30 bis 150 kGy (3 bis 15 Mrad). Die Dosis ist abhängig von der Beschleunigerspannung des Generators, die im allgemeinen 150 bis 300, vorzugsweise 150 bis 200 kV, beträgt, der Bestrahlungsdauer, d.h. der Geschwindigkeit, mit der das erfindungsgemässe Gemisch durch den Generator geleitet wird, sowie vom Arbeitsstrom. Durch Änderung der Dosis lassen sich die Klebeeigenschaften gezielt verändern.

Zur Beurteilung der Klebeeigenschaften von flächigen Gebilden, die nach dem neuen Verfahren hergestellt sind, werden in den folgenden Beispielen Polyesterfolien derart mit Haftklebergemischen beschichtet, dass der Überzug eine Dicke von 25 µm (entsprechend einem Auftrag von 25 g/m²) auweist. Der auf dem Träger aufgebrachte Überzug wird mit Elektronenstrahlen in einer Elektro-Curtain-Anlage bestrahlt. Von den beschichteten und bestrahlten Folien werden jeweils 2 cm breite Prüfstreifen verwendet. Zur Bestimmung der Kohäsion wird der Schertest, zur Bestimmung der Klebrigkeit der Schältest wie folgt durchgeführt:

Beim *Schältest* werden die Prüfstreifen auf eine verchromte Platte aufgeklebt und parallel zur Klebeschicht, d.h. unter einem Winkel von 180°, abgeschält und die dafür notwendige Kraft gemessen. Die Abzugsgeschwindigkeit beträgt 300 mm/min und die Messung wird 24 h nach der Verklebung durchgeführt.

Als Mass für die Kohäsion der Klebstoffschicht

wird der *Schertest* derart durchgeführt, dass die Prüfstreifen auf ein hochglanzverchromtes Blech mit einer Fläche von 2,0 × 2,5 cm aufgepresst werden. Das Blech wird senkrecht eingespannt und das Ende des Klebestreifens mit 1000 g belastet. Es wird dann die Zeit bestimmt, bis sich die Verklebung unter der konstanten Zugspannung von 1000 g löst. Die Messung wird bei 20 und bei 50° C ausgeführt.

Die in den folgenden Beispielen angegebenen Teile und Prozente beziehen sich, wenn nicht anders angegeben, auf das Gewicht.

Die Bestimmung der K-Werte erfolgt nach DIN 53726. Die Abkürzungen A bzw. K bedeuten Adhäsions- bzw. Kohäsionsbruch. Die in den Beispielen angegebenen Erweichungspunkte werden nach DIN 53180 bestimmt.

Die Messung der Glasübergangstemperatur wird mit Hilfe der Differentialkalorimetrie wie üblich durchgeführt.

*Beispiel 1:*

90 Teile eines Versaticsäuremonoestergemisches von 2,3-Dihydroxypropyl-1-acrylat und 1,3-Dihydroxypropyl-2-acrylat wurden mit 10 Teilen eines handelsüblichen Cyclohexanonharzes, hergestellt nach der in Ullmanns „Encyclopädie der Technischen Chemie", Bd. 12, 1976, S. 551, angegebenen Vorschrift, Erweichungspunkt 80° C, gemischt.

Nach Beschichten von Polyesterfolie mit 25 g/m² und Bestrahlen mit Elektronenstrahlen der Dosis 75 kGy wurden folgende Klebewerte erhalten: Schälfestigkeit: 4,5 N/2 cm; Scherfestigkeit bis 20°C: > 3 d; Scherfestigkeit bei 50°C: > 3 d.

*Beispiel 2:*

In einem Mischwerk wurde bei 100°C ein Gemisch aus 50 Teilen Mono-2-ethylhexylethergemisch von Dihydroxypropylacrylat, 40 Teilen eines Mischpolymerisats aus 60 Teilen Ethylhexylacrylat, 38 Teilen Vinylacetat und 2 Teilen Acrylsäure, das durch Lösungspolymerisation hergestellt und anschliessend getrocknet wurde, einen K-Wert von 60 und eine Glastemperatur von −30° C hat, sowie 10 Teilen eines handelsüblichen Glycerinesters des Kolophoniums eines Erweichungspunkts von 85° C hergestellt.

Nach Beschichten von Polyesterfolie mit 25 g/m² und Bestrahlen mit Elektronenstrahlen der Dosis 35 kGy ergeben sich folgende Klebewerte: Schälfestigkeit: 2 N/2 cm; Scherfestigkeit bei 20°C: > 3 d; Scherfestigkeit bei 50°C: 4 h.

*Beispiele 3 bis 7:*

50 Teile des in Beispiel 1 eingesetzten Versaticsäureesters wurden mit 80 Teilen einer 50%igen Lösung des in Beispiel 2 angegebenen Mischpolymerisats von K-Wert 60 gemischt und das Lösungsmittel unter vermindertem Druck abgedampft.

Nach Zusatz von 10 Teilen eines nach DE-OS Nr. 2757220, Beispiel 1, hergestellten Aldehydharzes des Erweichungspunkts 80° C wurde Polyesterfolie mit der Masse beschichtet und mit Elektronenstrahlen unterschiedlicher Dosis bestrahlt.

*Klebewerte:*

| Beispiel | Dosis (kGy) | Schälfestigkeit (N/2 cm | Scherfestigkeit bei | |
|---|---|---|---|---|
| | | | 20° C | 50° C |
| 3 | 11 | 9,6 (A) | 40 h (K) | 2 h 40′ (K) |
| 4 | 21 | 9,1 (A) | 63 h (K) | 5 h (K) |
| 5 | 42 | 8,0 (A) | >3 d | >3 d |
| 6 | 149 | 7,5 (A) | >3 d | >3 d |
| 7 | 298 | 5,9 (A) | >3 d | >3 d |

*Beispiel 8:*

Dem Gemisch nach Beispiel 3 bis 7 wurden zusätzlich 5 Teile Trimethylolpropantriacrylat zugegeben. Nach Beschichten von Polyesterfolie und Bestrahlen mit Elektronenstrahlen einer Dosis von 21 kGy ergaben sich folgende Klebewerte: Schälfestigkeit: 7,4 N/2 cm; Scherfestigkeit bei 20°C: > 3 d; Scherfestigkeit bei 50°C: > 3 d.

*Beispiel 9:*

70 Teile Mono-n-butylethergemisch von Dihydroxypropylacrylat wurden mit 20 Teilen eines Poly-n-butylacrylats des K-Werts 35 und einer Glasübergangstemperatur von −50°C sowie 10 Teilen N-Vinylcaprolactam gemischt.

Nach Beschichten von Polyesterfolie und Bestrahlen mit Elektronenstrahlen einer Dosis von 35 kGy wurden folgende Klebewerte erhalten: Schälfestigkeit: 4 N/2 cm; Scherfestigkeit bei 20°C: 30 h; Scherfestigkeit bei 50°C: 3 h.

*Vergleichsbeispiel:*

Ein Gemisch entsprechend dem Beispiel der DE-OS Nr. 2357486 ohne Zusatz eines Photoinitiators ergab nach Beschichten von Polyesterfolie und Bestrahlen mit einer Dosis von 35 kGy folgende Klebewerte: Schälfestigkeit: 4 N/2 cm; Scherfestigkeit bei 20° C: 25 h; Scherfestigkeit bei 50° C: 0,5 h.

**Patentansprüche**

1. Verfahren zur Herstellung von selbsthaftenden Überzügen durch Beschichten von Trägermaterialien mit Acrylsäureestern und Bestrahlen der Überzüge mit energiereichen Strahlen, dadurch gekennzeichnet, dass man als Acrylsäureester Derivate von Dihydroxypropylacrylsäureestern einsetzt und diese im Gemisch mit

a) 0 bis 120 Gew.-% Polymeren einer Glastemperatur unter 0° C und eines K-Werts von 20 bis 80, und/oder

b) 0 bis 90 Gew.-% eines üblichen klebrigmachenden Harzes

auf die Trägermaterialien aufträgt, wobei die Menge an (a) und (b) zusammen mindestens 5 Gew.-% beträgt und die Gewichtsprozente von (a) und (b) auf das Gewicht der Dihydroxypropylacrylatderivate bezogen ist.

2. Verfahren nach Anspruch 1, dadurch gekennzeichnet, dass das Gemisch zusätzlich 2 bis 10 Gew.-%, bezogen auf die Dihydroxypropylacrylatderivate, an mindestens zweifach olefinisch ungesättigten Monomeren enthält.

## Revendications

1. Procédé de préparation d'enduits autoadhésifs par enduction de matériaux-supports avec des esters de l'acide acrylique et exposition des enduits à un rayonnement riche en énergie, caractérisé en ce que l'on emploie comme esters de l'acide acrylique des dérivés de dihydroxypropylacrylates, qui sont appliqués sur les matériaux-supports en mélange avec

a) 0 à 120% en poids de polymères d'une valeur K comprise entre 20 et 80 et avec une température de transition vitreuse inférieure à 0°C, et/ou

b) 0 à 90% en poids d'une résine adhésive usuelle,

les pourcentages de a et de b se rapportant au poids des dérivés de dihydroxypropylacrylates et la somme de a + b correspondant à 5% en poids au moins.

2. Procédé suivant la revendication 1, caractérisé en ce que le mélange contient en outre 2 à 10% en poids, par rapport aux dérivés de dihydroxypropylacrylates, de monomères comportant au moins deux doubles liaisons oléfiniques.

## Claims

1. A process for the production of self-adhesive coatings by applying acrylates to a base and exposing the coating to high-energy radiation, wherein derivatives of dihydroxypropyl acrylates are employed as the acrylates, these are mixed with

(*a*) from 0 to 120% by weight of polymers having a glass temperature below 0°C and a K value of from 10 to 80, and/or

(*b*) from 0 to 90% by weight of a conventional tackifying resin, and the mixture is applied to the base, the amount of (*a*) and (*b*) together being not less than 5% by weight and the percentages of (*a*) and (*b*) being based on the weight of the dihydroxypropyl acrylates derivatives.

2. A process as claimed in Claim 1, wherein the mixture additionally contains from 2 to 10% by weight, based on the dihydroxypropyl acrylate derivatives, of olefinically unsaturated monomers containing two or more double bonds.